# EUROPÄISCHE PATENTANMELDUNG

(11) **EP 0 606 560 A1**
(43) Veröffentlichungstag der Anmeldung: **20.07.1994**
(21) Anmeldenummer: 93118777.7
(22) Anmeldetag: 22.11.1993
(51) Int. Cl.: E05D 15/26, F16P 3/08

(54) **Türe für Schutzkabinen**

(30) Priorität: 14.01.1993 DE 9300424 U
(71) Anmelder: DECKEL MAHO GmbH, D-87459 Pfronten (DE)
(72) Erfinder: Schmidt, Klaus, D-99846 Seebach (DE); Quent, Roland, D-99842 Ruhla (DE)
(74) Vertreter: Patentanwälte Beetz - Timpe - Siegfried Schmitt-Fumian - Mayr

(57) **Zusammenfassung**

Gegenstand der Erfindung ist eine Türe für Schutzkabinen von programmgesteuerten Werkzeugmaschinen, insbesondere von spanenden Bearbeitungszentren, bestehend aus mindestens einem mit Sichtfenstern 9 versehenen Türflügel 5, 6, der bewegbar an der Schutzkabine angeordnet ist und einen Türgriff 20 sowie Schaltglieder zur Betätigung von mit dem Hauptantrieb der Werkzeugmaschine elektrisch verbundenen AUS-Schaltern aufweist. Zum Erhalt einer verbesserten Zugänglichkeit des Arbeitsraumes besteht jeder Türflügel 5, 6 aus mindestens zwei um vertikale Gelenke 12 schwenkbar miteinander verbundenen Segmenten 7, 8, wobei ein Segment 8 mit seiner hinteren Endkante an einem vertikalen Holm der Schutzkabine 1 angelenkt und eines der frontseitigen Segmente 7 über einen etwa horizontalen schwenkbaren Lenkarm 15 mit einer oberen Traverse 17 des Kabinenrahmens gelenkig verbunden ist.

## Beschreibung

Die Erfindung betrifft eine Türe für die Schutzkabinen von programmgesteuerten Werkzeugmaschinen, insbesondere von spanenden Bearbeitungszentren, bestehend aus mindestens einem mit Sichtfenstern versehenen Türflügel, der bewegbar an der Schutzkabine angeordnet ist und einen Türgriff sowie Schaltglieder zur Betätigung von mit dem Hauptantrieb elektrisch verbundenen AUS-Schaltern aufweist.

Herkömmliche Kabinentüren von Bearbeitungszentren sind in der Regel als Schiebetüren ausgebildet, die in zurückgezogener Offenstellung den Zugang zu dem Werkstücktisch freigeben und einen Wechsel der meist auf Paletten aufgespannten Werkstücke mit Hilfe eines frontseitig angeordneten Palettenwechslers ermöglichen.

Entsprechend dem Bearbeitungszyklus bei programmgesteuerten Bearbeitungszentren und flexiblen Fertigungszellen kann das Öffnen und Schließen der Schiebetüren durch motorische Antriebsaggregate erfolgen, die entsprechend dem jeweiligen Programm angesteuert werden. Ein Vorteil dieser Schiebetüren gegenüber den Schwenktüren liegt darin, daß während der Öffnungs- und Schließbewegungen die Türflügel nicht in den umgebenden Raum hineinragen, was zu Kollisionsgefahren mit dort befindlichen Hilfsaggregaten führen könnte. Andererseits ist jedoch die Zugänglichkeit des Arbeitsraums der jeweiligen Maschine begrenzt, weil die in der Regel nur geradlinig bewegbaren Schiebetüren in ihrer Offenstellung noch einen gewissen Teil des Arbeitsraumes abdecken. Die freie Zugänglichkeit des Arbeitsraums und damit auch des Werkstücktisches wird damit eingeschränkt.

Aufgabe der Erfindung ist es, eine Türe für die Schutzkabine von programmgesteuerten Werkzeugmaschinen, insbesondere von spanenden Bearbeitungszentren, zu schaffen, welche die Zugänglichkeit des Arbeitsraumes der Werkzeugmaschine ohne wesentliche Beeinträchtigung des umgebenden Raumes erheblich verbessert.

Diese Aufgabe wird erfindungsgemäß dadurch gelöst, daß jeder Türflügel aus mindestens zwei um vertikale Gelenke schwenkbar miteinander verbundenen Segmenten besteht, wobei eines dieser Segmente mit seiner vertikalen Endkante am Kabinenrahmen angelenkt und eines der frontseitigen Segmente über einen etwa horizontal angeordneten schwenkbaren Lenkarm mit einer oberen Traverse des Kabinenrahmens gelenkig verbunden ist.

Die erfindungsgemäße Türe ist in ihrer zweckmäßigsten Ausführung als Doppelflügel-Falttüre ausgebildet, wobei jeder der aus mindestens zwei Segmenten bestehenden Türflügel an der vorderen Schließkante seines frontseitigen Segmentes von dem formsteifen und in einer Horizontalebene schwenkenden Lenkarm geführt wird. Dieser Lenkarm befindet sich oberhalb des Arbeitsbereiches, so daß er bei seinen Schwenkbewegungen nicht mit voluminösen bzw. sperrigen Werkstücken kollidieren kann.

Für eine spezielle Ausführung von Bearbeitungszentren, bei denen zwei gegeneinander auswechselbare Werkstücktische mit von der Kabine abgedeckt werden, ist eine Ausführung der erfindungsgemäßen Türe besonders geeignet, die zwei symmetrische schwenkbare Türflügel mit je zwei Segmenten aufweist, wobei die beiden Seitensegmente geradlinig und die beiden Vordersegmente abgewinkelt ausgebildet sind. Ein Seitenteil dieser Vordersegmente verläuft in Richtung der beiden Seitensegmente schräg zur vertikalen Mittelebene der Werkzeugmaschine. Die frontseitigen Abschnitte dieser beiden abgewinkelten Segmente decken die Vorderseite der Maschine ab. Damit während der Werkstückbearbeitung das auf dem zweiten Werkstücktisch aufgespannte Werkstück nicht durch Späne, Kühlflüssigkeit od. dgl. verschmutzt wird, ist zwischen den beiden Werkstücktischen zweckmäßig eine formsteife vertikale Glasscheibe montiert, welche die Beobachtung des Bearbeitungsfortschritts durch die Sichtfenster der Schutzkabine zuläßt.

Gemäß einer anderen zweckmäßigen Ausgestaltung der erfindungsgemäßen Türen sind die vertikalen Seitenkanten der Segmente an den vertikalen Gelenken abgeschrägt und bilden einen V-förmigen Spalt, um das Einklemmen der Finger oder anderer Gegenstände beim Schließen und Öffnen der Tür auszuschließen. Dieser Spalt ist seinem Zweck entsprechend dimensioniert.

Um einen ausreichend großen Schwenkbereich beim Öffnen der Türen zu erhalten, und zwar ohne den äußeren Schwenkbereich wesentlich zu vergrößern, können die beiden Lenkarme zweckmäßigerweise einerseits im mittleren Bereich der Traverse des Kabinenrahmens und andererseits im vorderen Endbereich der frontseitigen Segmente angelenkt sein und eine vertikal und/oder horizontal abgewinkelte Form haben. Ferner können an diesen beiden Tragarmen Stellantriebe in Form von beispielsweise Hydraulikzylindern angreifen, die entsprechend dem jeweiligen Bearbeitungsprogramm angesteuert werden und die Türflügel dementsprechend öffnen oder schließen.

Gemäß einer weiteren zweckmäßigen Ausgestaltung der Erfindung sind an den Vordersegmenten jedes Türflügels im Bereich ihrer Schließkante Griffstangen mit eingebauten Handschaltern angeordnet, wobei diese Handschalter einmal die Verriegelung des jeweiligen Türflügels in seiner Schließstellung lösen und gleichzeitig den Maschinenbetrieb z. B. durch Abschalten des Hauptantriebs unterbrechen.

Weitere zweckmäßige Maßnahmen und Merkmale lassen sich der folgenden Beschreibung eines bevorzugten Ausführungsbeispiels anhand der Zeichnung entnehmen. Es zeigen:
Fig. 1 den vorderen Teil einer Schutzkabine für ein Bearbeitungszentrum mit einem in seine Offenstellung geschwenkten Türflügel gemäß der Erfindung in perspektivischer Darstellung;
Fig. 2 den vorderen Teil einer Schutzkabine mit der erfindungsgemäßen Falttür in geschlossener, teilgeöffneter und vollgeöffneter Stellung in Draufsicht.

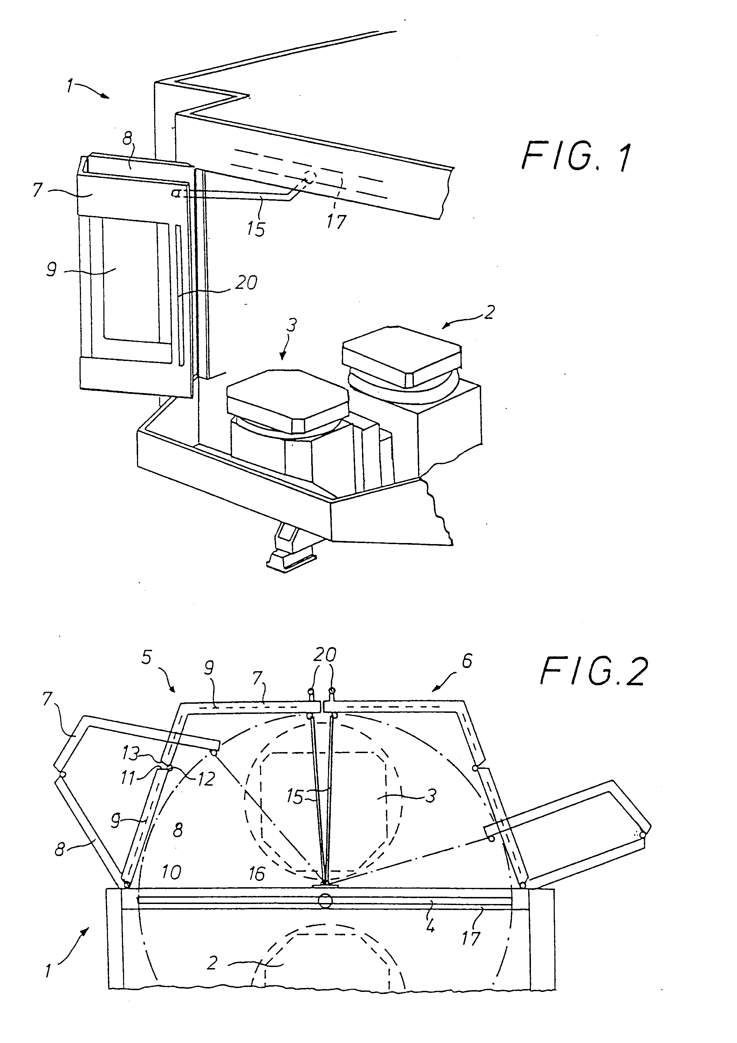

Die dargestellte Schutzkabine 1 ist für ein Bearbeitungszentrum konzipiert, zu dem zwei Arbeitstische 2, 3 gehören, die als Rundtische ausgeführt sind und durch eine Drehbewegung eines - in Fig. 1 nicht dargestellten - Palettenwechslers um 180 aus ihren jeweiligen Positionen in eine diametral gegenüberliegende Position geschwenkt werden können. Zwischen beiden Tischen 2 und 3 ist eine - nur in Fig. 2 dargestellte - Glasplatte 4 vertikal angeordnet, welche die Verdrehbewegung der beiden Tische 2, 3 mitmacht, wie dies durch die strichpunktierte Kreisbahn in Fig. 2 angegeben ist.

Um das auf dem vorderen Arbeitstisch 3 zur folgenden Bearbeitung bereitgestellte Werkstück nach außen abzuschirmen, ist die in der Zeichnung dargestellte Türe so ausgebildet, daß sie in geschlossener Stellung diesen Arbeitstisch 3 seitlich und nach vorne abdeckt sowie in ihrer vollgeöffneten Stellung einen freien Zugang zu diesem Werkstücktisch 3 bzw. zu dem ggf. bereits darauf befindlichen Werkstück von drei Seiten aus ermöglicht.

Die erfindungsgemäße Falttüre besteht aus zwei Türflügeln 5, 6, wobei jeder dieser Türflügel von zwei Segmenten 7, 8 gebildet wird. In jedem Segment sind Sichtfenster 9 vorgesehen. Da die beiden Türflügel gleich aufgebaut sind, wird im folgenden nur einer dieser Türflügel im einzelnen beschrieben. Wie insbesondere aus Fig. 2 ersichtlich, sind die seitlichen Segmente 8 mit ihrer einen vertikalen Endkante über Scharniere 10 an einem Vertikalholm des Kabinenrahmens angelenkt. Die andere vertikale Endkante 11 dieser Seitensegmente 8 ist abgeschrägt und über Scharniere 12 mit der ebenfalls abgeschrägten vertikalen Endkante 13 des angrenzenden Frontsegmentes 7 gelenkig verbunden. Die beiden schrägen Endkanten 11 und 13 der beiden Segmente 8 und 7 bilden einen V-förmigen Spalt, der ausreichend breit bemessen ist, um das Einquetschen der Finger insbesondere beim Schließen der Türe sicher zu verhindern.

Im Bereich der vorderen Schließkante der abgewinkelten frontseitigen Segmente 7 sind Lenkarme 15 angelenkt, deren rückseitige Enden über Gelenke 16 an einer oberen formsteifen Traverse 17 der Rahmenkonstruktion der Schutzkabine 1 angelenkt sind. Die Lenkarme können geradlinig (vgl. Fig. 2) oder auch seitlich bzw. vertikal abgekröpft (vgl. Fig. 1) ausgebildet sein, um eine der Form der jeweiligen Tür entsprechende Bewegungsbahn zu ermöglichen. Bei den dargestellten Ausführungsbeispielen sind die Lenkarme 15 ausreichend steif ausgebildet, um zumindest einen Gewichtsanteil der jeweiligen Türflügel ohne Verformung aufzunehmen und den jeweiligen Türflügel während seiner Öffnungs- und Schließbewegung sicher zu führen. Als Führungselement kann auch eine untere Laufschiene vorgesehen sein, auf der eine an der unteren Ecke jedes Segmentes 7 montierte Laufrolle oder ein entsprechender Gleitschuh läuft.

Im Bereich der vorderen Schließkante der Segmente 7 ist je eine Griffstange 20 montiert, in deren Griffbereich zusätzliche Betätigungselemente für die - nicht dargestellten - Verriegelungsvorrichtungen sowie für elektrische Schalter vorgesehen sind. Beim Umgreifen der Griffstange werden durch den Fingerdruck die Betätigungselemente niedergedrückt, woraufhin erst die Verriegelung gelöst und der jeweilige Türflügel geöffnet werden kann. Gleichzeitig erfolgt durch das Niederdrücken der Betätigungselemente eine Aktivierung des zugeordneten elektrischen Schalters, der die Stromzufuhr zur Maschine unterbricht und damit die gesamte Werkzeugmaschine stillsetzt.

Die Erfindung ist nicht auf die dargestellte Ausführung beschränkt. So können die erfindungsgemäßen Falttüren auch bei Werkzeugmaschinen und Bearbeitungszentren ohne den jeweils vorgebauten zweiten Werkstücktisch 3 eingesetzt werden, wobei der wesentliche Vorteil einer freien Zugänglichkeit des dann einzigen Arbeitstisches 3 voll erhalten bleibt. Darüber hinaus können die Türflügel der erfindungsgemäß ausgebildeten Falttüren auch aus mehr als zwei Segmenten bestehen, wobei in diesem Fall die einzelnen Segmente dann durch Gelenkhebelgestänge mit entsprechender Kinematik miteinander verbunden sein sollten.

## Patentansprüche

1. Türe für Schutzkabinen von programmgesteuerten Werkzeugmaschinen, insbesondere von spanenden Bearbeitungszentren, bestehend aus mindestens einem mit Sichtfenstern versehenen Türflügel, der bewegbar an der Schutzkabine angeordnet ist und einen Türgriff sowie Schaltglieder zur Betätigung von mit dem Hauptantrieb der Werkzeugmaschine elektrisch verbundenen AUS-Schaltern aufweist,
dadurch gekennzeichnet,
daß jeder Türflügel (5, 6) aus mindestens zwei um vertikale Gelenke (12) schwenkbar miteinander verbundenen Segmenten (7, 8) besteht, wobei ein Segment (8) mit seiner hinteren Endkante an einem vertikalen Holm der Schutzkabine (1) angelenkt und eines der frontseitigen Segmente (7) über einen etwa horizontalen schwenkbaren Lenkarm (15) mit einer oberen Traverse (17) des Kabinenrahmens gelenkig verbunden ist.

2. Türe nach Anspruch 1,
dadurch gekennzeichnet,
daß zwei schwenkbare Türflügel (5, 6) mit je zwei Segmenten (7, 8) vorgesehen sind, wobei die beiden Seitensegmente (8) geradlinig und die beiden Vordersegmente (7) abgewinkelt ausgebildet sind.

3. Türe nach Anspruch 1 oder 2,
dadurch gekennzeichnet,
daß die vertikalen Seitenkanten (11, 13) der Segmente (7, 8) neben den vertikalen Gelenken (12) abgeschrägt sind und einen V-förmigen Fingerspalt begrenzen.

4. Türe nach einem der Ansprüche 1 bis 3, dadurch gekennzeichnet,
daß die beiden Lenkarme (15) einerseits im mittleren Bereich der Traverse (17) und andererseits im vorderen Endbereich der frontseitigen Segmente (7) oberhalb des Arbeitsbereiches angeordnet sind.

5. Türe nach Anspruch 4,
dadurch gekennzeichnet,
daß die Lenkarme (15) abgekröpft ausgebildet sind.

6. Türe nach einem der Ansprüche 1 bis 5, dadurch gekennzeichnet,
daß an den Vordersegmenten (7) im Bereich ihrer Schließkanten Griffstangen (20) mit eingebauten Betätigungselementen und Handschaltern angeordnet sind.
